Europäisches Patentamt

European Patent Office

Office européen des brevets

(19)

(11) Veröffentlichungsnummer: **0 010 269
B1**

(12) **EUROPÄISCHE PATENTSCHRIFT**

(45) Veröffentlichungstag der Patentschrift:
26.05.82

(51) Int. Cl.³: **F 16 N 7/32**

(21) Anmeldenummer: **79103935.7**

(22) Anmeldetag: **12.10.79**

(54) Verfahren zum Aufteilen eines in einem Trägermedium herangeführten, tropfenförmigen Schmiermediums In wenigstens zwei voneinander getrennte Ausgangsströmungen sowie Vorrichtung zur Durchführung dieses Verfahrens.

(30) Priorität: **16.10.78 DE 2844995**

(43) Veröffentlichungstag der Anmeldung:
30.04.80 Patentblatt 80/9

(45) Bekanntmachung des Hinweises auf die Patenterteilung:
26.05.82 Patentblatt 82/21

(84) Benannte Vertragsstaaten:
**AT BE CH FR GB IT LU NL SE**

(56) Entgegenhaltungen:
**CH-A-260 169
US-A-2 334 942
US-A-2 959 249
US-A-3 665 684**

(73) Patentinhaber: **Schnell, Horst, Donatusstrasse 65,
D-4052 Korschenbroich 1 (DE)**

(72) Erfinder: **Schnell, Horst, Donatusstrasse 65,
D-4052 Korschenbroich 1 (DE)**

(74) Vertreter: **Bonsmann, Manfred, Dipl.-Ing.,
Kaldenkirchener Strasse 35a,
D-4050 Mönchengladbach 1 (DE)**

Verfahren zum Aufteilen eines in einem Trägermedium herangeführten, tropfenförmigen Schmiermediums in wenigstens zwei voneinander getrennte Ausgangsströmungen sowie Vorrichtung zur Durchführung dieses Verfahrens

Die Erfindung betrifft ein Verfahren zum Aufteilen von einem in einem Trägermedium herangeführten, tropfenförmigen Schmiermedium in wenigstens zwei voneinander getrennte Ausgangsströmungen, vorzugsweise zum Aufteilen von in einer turbulenten Luftströmung herangeführten Öltropfen, sowie eine Vorrichtung zur Durchführung dieses Verfahrens.

Für die Zufuhr von Schmiermedium zu Reibstellen ist die Ölnebelschmierung bekannt, bei der in einem zentralen Ölnebelgerät das Schmieröl mikrofein vernebelt wird. Die Oberflächenspannung der mikrofeinen Ölpartikelchen ist grösser als die Anziehungskraft der Ölpartikel. Dies hat zur Folge, dass sich das mikrofein vernebelte Öl in einem Zustand befindet, welcher einem gasförmigen Aggregatzustand ähnelt. Das mikrofein vernebelte Öl kann in diesem Zustand von dem zentralen Vernebelungsgerät über Verteiler den einzelnen Reibstellen zugeführt werden. Das mikrofein vernebelte Öl wird vor den Schmierstellen in entsprechenden Düsen rückverdichtet, so dass sich dort wieder tropfenförmige Ölflüssigkeit bildet.

Ein Nachteil dieses Ölnebelsystems besteht darin, dass es nicht möglich ist, den Ölnebel vollständig wieder in eine Tropfenform zusammenzuführen, und dass dann durch den übrigbleibenden Ölnebel eine Umweltverschmutzung bzw. Umweltschädigung auftreten kann. Weiterhin kann der Ölnebel nur mit geringen Geschwindigkeiten transportiert werden, da der mikrofein vernebelte Aggregatzustand des Öls nur so lange aufrechterhalten bleibt, als die Strömung laminar ist. Wenn die Strömung turbulent wird, prallen die Ölpartikel zusammen und vereinigen sich zu so grossen Öltropfen, dass es sich wiederum um Flüssigkeit handelt. In diesem Zustand ist keine Aufteilung möglich, und das Öl läuft zum Behälter zurück. Die erforderliche geringe Strömungsgeschwindigkeit, die geringer sein muss als die der Reynolds-Zahl entsprechende kritische Strömungsgeschwindigkeit, bedingt relativ grosse Querschnitte für die Leitungen.

Es ist auch bekannt, einer Schmierstelle Schmiermedium in einer turbulenten Luftströmung zuzuführen. Bei diesem Verfahren treten jedoch Probleme bei der Aufteilung des tropfenförmigen, in der Luftströmung herangeführten Schmiermediums auf die einzelnen Schmierstellen auf. An den Abzweigstellen bewirkt nämlich die Schwerkraft, dass sich jeweils ein grösserer Teil der Öltropfen an der jeweils untersten Stelle des Verteilers befindet. Somit ist die Verteilung lageabhängig, was sich beispielsweise bei auf Fahrzeugen angebrachten Schmieranlagen negativ auswirkt. Es sind Versuche unternommen worden, Verteiler mit beweglichen Elementen einzusetzen. Diese Versuche haben jedoch zu keinen praktischen Erfolgen geführt. Weiterhin wurde bereits vorgeschlagen, in den Verteilern gesonderte Luftwirbel (ähnlich einem Zyklon) zu erzeugen. Da jedoch die Viskosität des Schmiermediums in weiten Grenzen schwanken kann, hat sich auch dieser Vorschlag als nicht erfolgreich erwiesen. Im Hinblick darauf, dass die Schmieröle infolge ihrer unterschiedlichen Viskositäten strömungsmässig nicht berechenbar sind, und da das Verhältnis der Luftmenge zu der Ölmenge je nach Bedarf unterschiedlich ist, so dass die Einbaulage eine entsprechende Rolle spielt, ist es üblich, bei einer Schmierung mit einem Öl-Luftgemisch, welches in einer turbulenten Luftströmung herangeführt wird, dem Luftstrom die Ölmenge für jede Reibstelle gesondert dosiert zuzugeben.

Der Erfindung liegt die Aufgabe zugrunde, ein Verfahren zu schaffen, mittels dessen eine Aufteilung eines in einem Trägermedium herangeführten tropfenförmigen Schmiermediums in wenigstens zwei voneinander getrennte Ausgangsströmungen erzielt werden kann, bei dem die Aufteilung lageunabhängig ohne bewegliche Teile erfolgt, so dass der Einfluss der Schwerkraft auf die Öltropfen bei der Verteilung keine Rolle mehr spielt, und dass somit die von dem Öl-Nebelsystem bekannten Vorteile mit den bekannten Vorteilen des Öl-Luftsystems ohne die jeweiligen Nachteile kombiniert werden.

Zur Lösung dieser Aufgabe ist erfindungsgemäss vorgesehen, dass die Eingangsströmung in eine Mehrzahl von Zwischenströmungen unterteilt wird, und jeweils eine Gruppe von gruppenweise zusammengefassten Zwischenströmungen in eine der Ausgangsströmungen mündet, und die Zwischenströmungen an den Übergängen von der Eingangsströmung in die Zwischenströmungen gruppenweise insgesamt gleichwertige räumliche Vorzugsrichtungen aufweisen.

Der Erfindung liegt der Gedanke zugrunde, das Schmiermedium zwischen der Eingangsströmung und den Ausgangsströmungen in eine Vielzahl von Zwischenströmungen zu unterteilen. Bei der Aufteilung einer Eingangsströmung in zwei Ausgangsströmungen kann beispielsweise vorgesehen sein, dass die Eingangsströmung zunächst in acht Zwischenströmungen unterteilt wird, von denen jeweils vier in eine Ausgangsströmung zusammengeführt werden. Der Begriff «gleichwertige räumliche Vorzugsrichtungen» ist dabei so zu verstehen, dass jeweils zwei Zwischenströmungen am Boden des Eingangskanals münden, jeweils zwei Zwischenströmungen an den beiden gegenüberliegenden Seitenwänden und jeweils zwei Zwischenströmungen an der Oberseite des Kanals abzweigen. Die Zwischenströmungen zweigen somit in vier unterschiedlichen Lagen ab, und zwar am Boden, an den gegenüberliegenden Seiten und an der Oberseite. Je eine der Zwischenströmungen vom Boden, von den gegenüberliegenden und der Oberseite wird dann in eine Ausgangsströmung zusammengeführt, während die übrigen vier Zwischenströmungen in die andere Ausgangsströmung zusammengeführt werden. Da somit jeder Ausgangsströmung vier Zwischenströmungen mit unterschiedlichen räumlichen Vorzugsrichtungen am Übergang von der Eingangsströmung in die Zwischenströmungen zugeordnet sind, ist die dadurch erzielte Aufteilung lageunabhängig, da sich der Einfluss der Gravitationskraft auf die Öltropfen in jeder Lage gleich auf die Verteilung auswirkt.

Das Verfahren ist selbstverständlich nicht auf das vorstehend beschriebene Ausführungsbeispiel beschränkt, sondern es ist natürlich eine Aufteilung in mehr als zwei Ausgangsströmungen möglich, und es kann auch eine wesentlich grössere Anzahl von Zwischenströmungen als erwähnt vorgesehen sein. Das erfindungsgemässe Verfahren weist die Vorteile auf, dass es von der Einbaulage der Anordnung unbeeinflusst arbeitet, dass es ohne bewegliche Elemente auskommen kann. Ein weiterer Vorteil besteht darin, dass das Verhältnis von Trägermedium zu Schmiermedium entsprechend der Vordosierung erhalten bleibt, so dass der Aufteilungsvorgang dieses Verhältnis unbeeinflusst lässt. Weiterhin kann das Verfahren unabhängig von der Viskosität des Schmiermediums eingesetzt werden. Es ist für den gesamten Bereich von dünnflüssigen bis hochviskosen Schmiermedien verwendbar.

Weitere Vorteile des erfindungsgemässen Verfahrens bestehen darin, dass das Schmiermedium, beispielsweise Öl, flüssig bleibt, so dass das Öl an der Reibstelle mit Hilfe der zum Transport verwendeten Luft versprüht werden kann. Es tritt kein Ölnebel aus, und das Verfahren ist somit umweltfreundlich. Weiterhin kann je nach Anwendungsfall das Verhältnis Trägermedium-Schmiermedium an der Zentrale je nach Anwendungsfall verändert werden. Gegenüber dem Öl-Nebelsystem kann eine höhere Fördergeschwindigkeit verwendet werden, was zu kleinen Querschnitten führt. Im Verhältnis zu Verteilern mit beweglichen Elementen arbeitet das erfindungsgemässe Verfahren verschleissfrei. Ein Aufheizen des Öls zur Verringerung der Ölviskosität ist nicht erforderlich.

Eine Vorrichtung zur Durchführung des erfindungsgemässen Verfahrens mit einem der Eingangsströmung zugeordneten Eingangskanal und mehreren, den Ausgangsströmungen zugeordneten Ausgangskanälen ist dadurch gekennzeichnet, dass die Ausgangskanäle mit dem Eingangskanal über je eine Gruppe mit einer gleichen Anzahl von Zwischenkanälen verbunden sind, und die Einmündungen der Zwischenkanäle in dem Eingangskanal räumlich so angeordnet sind, dass jeder Einmündung eines Zwischenkanals in den Eingangskanal jeweils eine Einmündung eines Zwischenkanals einer jeden anderen Gruppe von Zwischenkanälen unmittelbar benachbart ist.

Nach einem weiteren Merkmal der Erfindung kann vorgesehen sein, dass die Ausgangskanäle unterschiedlich grosse Durchtrittsquerschnitte aufweisen.

Nach einem weiteren Merkmal der Erfindung kann vorgesehen sein, dass die Einmündungen der Zwischenkanäle in den Eingangskanal radial um die gedachte Mittelachse des Eingangskanals verteilt nebeneinander angeordnet sind, und die Zwischenkanäle mit nebeneinanderliegenden Einmündungen unterschiedlichen Gruppen zugeordnet sind.

Nach einem weiteren Merkmal der Erfindung kann vorgesehen sein, dass die Zwischenkanäle der einen Gruppe in einen den Eingangskanal umgebenden Ringkanal münden, an den ein Ausgangskanal angeschlossen ist, und dass die andere Gruppe von Zwischenkanälen in einen axial zum Eingangskanal und von diesem durch eine Trennwand abgeteilten Ausgangskanal münden.

Nach einem weiteren Merkmal der Erfindung kann vorgesehen sein, dass in den Ausgangskanälen Drosseleinrichtungen vorgesehen sind. Mittels dieser Drosseleinrichtungen kann das Aufteilverhältnis unterschiedlich gestaltet werden. Wenn die Drosseleinrichtungen beispielsweise in Form von Blenden ausgestaltet sind, und die Blendenöffnungen in den Ausgangskanälen gleich gross sind, so erfolgt eine gleichmässige Aufteilung. Sind die Blendenöffnungen unterschiedlich gross, so ergeben sich entsprechend den Querschnittsunterschieden unterschiedliche Strömungsaufteilungen.

Die Erfindung wird nachfolgend anhand der in den Zeichnungen schematisch dargestellten Ausführungsbeispiele näher erläutert. Es zeigen:

Fig. 1 eine schematische Darstellung einer Mehrzahl von Verteilungseinrichtungen,

Fig. 2 einen Schnitt durch eine Verteilungseinrichtung in vergrössertem Massstab, und zwar entsprechend der Linie II–II in Fig. 1,

Fig. 3 eine perspektivische Schnittdarstellung entsprechend der Linie III–III in Fig. 2.

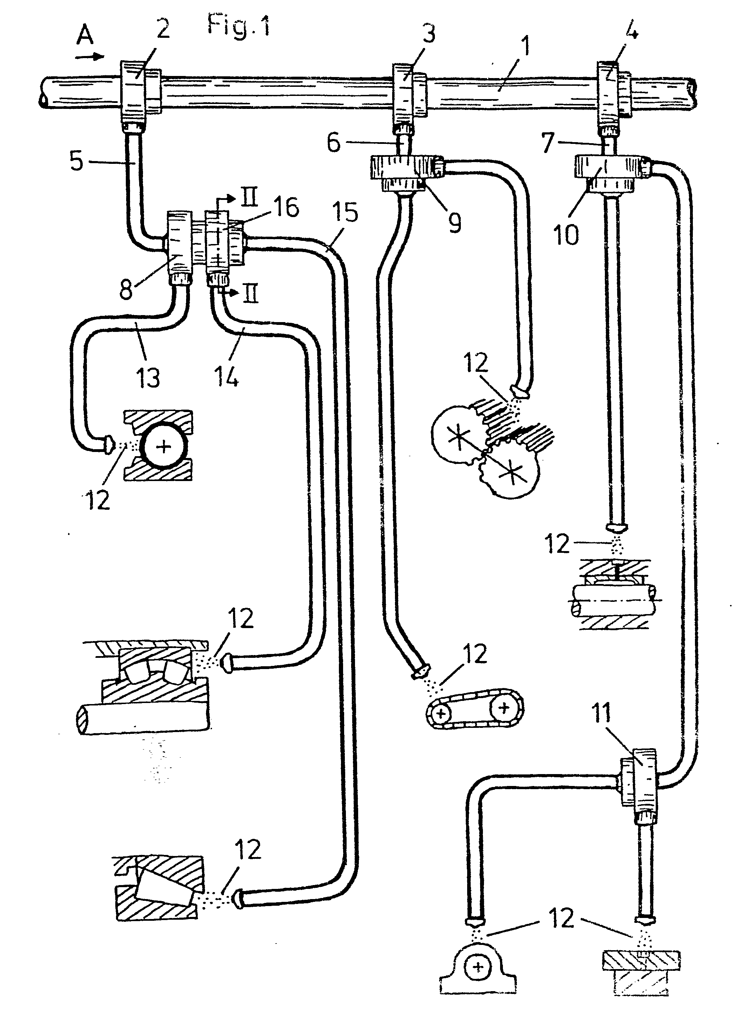

Von einer (nichtdargestellten) Zentraleinrichtung wird ein Öl-Luftgemisch, bei dem das Öl nicht in vernebeltem Zustand, sondern in tropfenförmigem Zustand enthalten ist, in einer turbulenten Luftströmung in Richtung des Pfeiles A in einer Leitung 1 herangeführt. Die Leitung 1 weist mehrere Verteiler 2, 3, 4 ... auf, an welche sich Abzweigleitungen 5, 6, 7 anschliessen. An die Abzweigleitungen schliessen sich weitere Verteiler 8, 16, 9, 10 sowie 11 an. Von diesen Verteilern aus wird das Öl-Luftgemisch, welches mit 12 bezeichnet ist, Reibstellen bzw. Schmierstellen zugeführt, die als Wälzlager, Gleitlager, Gleitflächen, Zahnräder, Ketten od.dgl. ausgebildet sein können, und die in Fig. 1 schematisch dargestellt sind. Die zu den Reibstellen führenden Abzweigleitungen sind bei dem Verteiler 8 mit 13 und bei dem Verteiler 16 mit 14 und 15 bezeichnet.

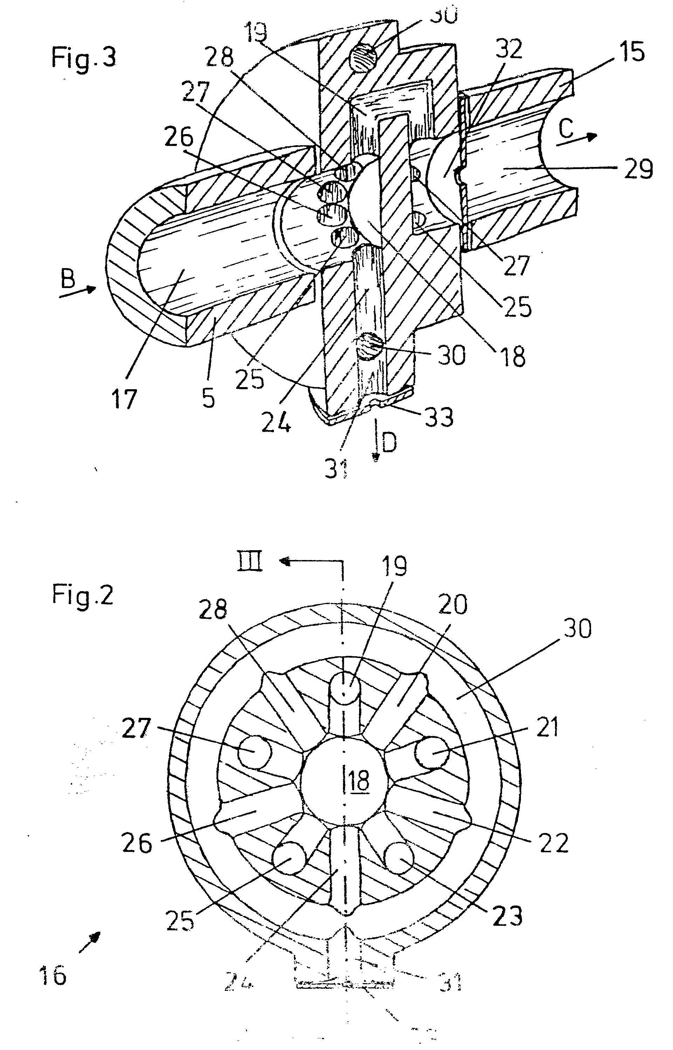

Der Verteiler 16 ist in den Fig. 2 und 3 in vergrössertem Massstab schematisch dargestellt und wird nachfolgend erläutert. Die Leitung 5 bildet in ihrem Inneren einen Eingangskanal 17 für eine Eingangsströmung in Richtung des Pfeiles B für die in einer turbulenten Luftströmung herangeführten Öltropfen. Der Eingangskanal 17 weist ein abgeschlossenes Stirnende 18 auf. Über den Innenumfang des Eingangskanals 17 sind in radialer Richtung verteilt insgesamt zehn Zwischenkanäle 19 bis 28 angeordnet. Die Zwischenkanäle 19, 21, 23, 25 und 27 führen sämtlich in einen Ausgangskanal 29, durch den das Öl-Luftgemisch der Reibstelle in Pfeilrichtung C zugeführt wird. Die jeweils zwischen den soeben erwähnten Zwischenkanälen liegenden Zwischenkanäle 20, 22, 24, 26 und 28 münden sämtlich in einen Ringkanal 30, welcher wiederum in einen Kanal 31 mündet, in welchem Öl-Luftgemisch in Pfeilrichtung D abströmt. Wenn sich infolge der Schwerkraft ein grösserer Teil der Öltropfen in der Eingangsströmung B im unteren Bereich des Eingangskanals befindet, so teilt sich dennoch unabhängig von der Schwerkraft die Strömung in die Ausgangsströmungen D und C gleichmässig auf, da beiden Ausgangsströmungen die gleiche Anzahl von Zwischenkanälen mit gleichen räumlichen Vorzugsrichtungen zugeordnet ist. Wenn der Verteiler eine andere räumliche Lage einnimmt, so bleibt diese Verteilung unverändert. Der Einfluss der Schwerkraft auf die Verteilung bei einer Lageänderung kann umso besser ausgeschaltet werden, je grösser die Anzahl der Zwischenkanäle ist.

In den Ausgangskanälen 29 bzw. 31 sind Drosseleinrichtungen 32 bzw. 33 vorgesehen, mittels derer der Querschnitt der Ausgangskanäle unterschiedlich gross gestaltet werden kann. Hierdurch wird eine grosse Variationsbreite der Aufteilungsverhältnisse ermöglicht. Wenn beispielsweise die Drosseleinrichtung einen Öffnungsradius von 0,1 mm aufweist, so entspricht dies einem Querschnitt von 0,0314 mm². Wenn die Öffnung der Drosseleinrichtung in einem anderen Ausgangskanal demgegenüber eine Bohrung mit einem Radius von 0,2 mm aufweist, so entspricht dies einem Querschnitt von 0,1256 mm², also dem vierfachen Querschnittswert des anderen Ausgangskanals (unter der Annahme, dass entgegen der zeichnerischen Darstellung die Querschnitte der Ausgangskanäle gleich gross sind). Beträgt der Radius einer Bohrung 1 mm, so entspricht der Querschnitt bereits dem hundertfachen Wert, verglichen mit einer Bohrung von 0,1 mm Radius.

Es ist natürlich auch möglich, dass das Trägermedium gleichzeitig Arbeitsmedium sein kann.

**Patentansprüche**

1. Verfahren zum Aufteilen eines in einem Trägermedium herangeführten, tropfenförmigen Schmiermediums in wenigstens zwei voneinander getrennte Ausgangsströmungen, vorzugsweise zum Aufteilen von in einer turbulenten Luftströmung herangeführten Öltropfen, dadurch gekennzeichnet, dass die Eingangsströmung in eine Mehrzahl von Zwischenströmungen unterteilt wird, und jeweils eine Gruppe von gruppenweise zusammengefassten Zwischenströmungen in eine der Ausgangsströmungen mündet und die Zwischenströmungen an den Übergängen von der Eingangsströmung in die Zwischenströmungen gruppenweise insgesamt gleichwertige räumliche Vorzugsrichtungen aufweisen.

2. Vorrichtung zur Durchführung des Verfahrens nach Anspruch 1, mit einem der Eingangsströmung zugeordneten Eingangskanal (17) und mehreren, den Ausgangsströmungen zugeordneten Ausgangskanälen (29, 31), dadurch gekennzeichnet, dass die Ausgangskanäle (29, 31) mit dem Eingangskanal (17) über je eine Gruppe mit einer gleichen Anzahl von Zwischenkanälen (19, 21, 23, 25, 27 bzw. 20, 22, 24, 26, 28) verbunden sind, und die Einmündungen der Zwischenkanäle in den Eingangskanal (17) räumlich so angeordnet sind, dass jeder Einmündung eines Zwischenkanals in den Eingangskanal jeweils eine Mündung eines Zwischenkanals einer jeden anderen Gruppe von Zwischenkanälen unmittelbar benachbart ist.

3. Vorrichtung nach Anspruch 2, dadurch gekennzeichnet, dass die Ausgangskanäle (29, 31) unterschiedlich grosse Durchtrittsquerschnitte aufweisen.

4. Vorrichtung nach Anspruch 2 oder 3, dadurch gekennzeichnet, dass die Einmündungen der Zwischenkanäle (19 bis 28) in den Eingangskanal (17) radial um die gedachte Mittelachse des Eingangskanals (17) verteilt nebeneinander angeordnet sind, und die Zwischenkanäle mit nebeneinanderliegenden Einmündungen unterschiedlichen Gruppen zugeordnet sind.

5. Vorrichtung nach einem der Ansprüche 2 bis 4, dadurch gekennzeichnet, dass die Zwischenkanäle (20, 22, 24, 26, 28) der einen Gruppe in einen den Eingangskanal (17) umgebenden Ringkanal (30) münden, an den ein Ausgangskanal (31) angeschlossen ist, und dass die andere Gruppe von Zwischenkanälen (19, 21, 23, 25, 27) in einen axial zum Eingangskanal (17) und von diesem durch eine Trennwand (18) abgeteilten Ausgangskanal (29) münden.

6. Vorrichtung nach einem der Ansprüche 2 bis 5, dadurch gekennzeichnet, dass in den Ausgangskanälen Drosseleinrichtungen (32, 33) vorgesehen sind.

**Claims**

1. A process for dividing a lubricant in droplet form, which is supplied in a carrier medium, into at least two separate discharge flows, preferably for dividing oil droplets which are supplied in a turbulent air flow, characterised in that the inlet flow is subdivided into a plurality of intermediate flows, and respective groups of intermediate flows which are combined together in a group-wise manner open into respective ones of the discharge flows, and the intermediate flows, at the transitions from the inlet flow into the intermediate flows, have collectively in groups equivalent spatial preferential directions.

2. Apparatus for carrying out the process according to claim 1 comprising an inlet conduit (17) associated with the inlet flow, and a plurality of discharge conduits (29, 31) associated with the discharge flows, characterised in that the discharge conduits (29, 31) are connected to the inlet conduit (17) by way of respective groups having the same number of intermediate conduits (19, 21, 23, 25, 27 and 20, 22, 24, 26, 28 respectively), and the openings of the intermediate conduits into the inlet conduit (17) are spatially so arranged that disposed directly adjacent each opening of an intermediate conduit into the inlet conduit is a respective opening of an intermediate conduit of each other group of intermediate conduits.

3. Apparatus according to claim 2 characterised in that the flow cross-sections of the discharge conduits (29, 31) are of different sizes.

4. Apparatus according to claim 2 or claim 3 characterised in that the openings of the intermediate conduits (19 to 28) into the inlet conduit (17) are arranged one beside the other and distributed radially around the imaginary centre line of the inlet conduit (17), and the intermediate conduits with openings disposed one beside the other are associated with different groups.

5. Apparatus according to one of claims 2 to 4 characterised in that the intermediate conduits (20, 22, 24, 26, 28) of one group open into an annular conduit (30) which encircles the inlet conduit (17) and to which a discharge conduit (31) is connected, and that the other group of intermediate conduits (19, 21, 23, 25, 27) opens into a discharge conduit (29) disposed axially with respect to the inlet conduit (17) and separated therefrom by a partitioning wall (18).

6. Apparatus according to one of claims 2 to 5 characterised in that throttle means (32, 33) are provided in the discharge conduits.

## Revendications

1. Procédé pour diviser un fluide lubrifiant en forme de gouttelettes, amené dans un fluide porteur, en au moins deux courants de sortie séparés, de préférence pour diviser des gouttelettes d'huile amenées dans un courant d'air en turbulence, procédé caractérisé en ce que le courant d'entrée est partagé en plusieurs courants intermédiaires, et chaque groupe de courants intermédiaires réunis entre eux débouche dans l'un des courants de sortie, les courants intermédiaires présentant, aux points de transition entre le courant d'entrée et les courants intermédiaires, des directions spatiales préférentielles identiques pour l'ensemble de chaque groupe.

2. Dispositif pour la mise en œuvre du procédé selon la revendication 1, comprenant un canal d'entrée (17) affecté au courant d'entrée, et plusieurs canaux de sortie (29, 31) affectés aux courants de sortie, dispositif caractérisé en ce que les canaux de sortie (29, 31) sont reliés chacun par l'intermédiaire d'un group, avec un nombre identique de canaux intermédiaires (19, 21, 23, 25, 27 ainsi que 20, 22, 24, 26, 28) les débouchés des canaux intermédiaires dans le canal d'entrée (17) étant disposés, dans l'espace, de telle manière que chaque débouché d'un canal intermédiaire dans le canal d'entrée soit directement voisin de l'embouchure d'un canal intermédiaire d'un autre groupe de canaux intermédiaires.

3. Dispositif suivant la revendication 2, caractérisé en ce que les canaux intermédiaires (29, 31) présentent des sections de passage de grandeurs différentes.

4. Dispositif suivant les revendications 2 ou 3, caractérisé en ce que les débouchés des canaux intermédiaires (19 à 28) dans le canal d'entrée (17) sont disposés l'un près de l'autre, répartis radialement autour de l'axe central du canal d'entrée (17) et les canaux intermédiaires sont disposés avec les débouchés de groupes différents placés l'un près de l'autre.

5. Dispositif suivant l'une quelconque des revendications 2 à 4, caractérisé en ce que les canaux intermédiaires (20, 22, 24, 26, 28) de l'un des groupes débouchent dans un canal annulaire (30) entourant le canal d'entrée (17), auquel est raccordé un canal de sortie (31), et en ce que les autres groupes de canaux intermédiaires débouchent dans un canal de sortie (29) coaxial au canal d'entrée (17) et séparé de celui-ci par une cloison (18).

6. Dispositif suivant l'une quelconque des revendications 2 à 5, caractérisé en ce que des dispositifs d'étranglement (32, 33) sont prévus dans les canaux de sortie.

Fig.1

Fig.3

19  30

28  32  15

27

26  C

29

B

17  5  25  18

24  25  30

33

31  D

III

Fig.2  19

28  20  30

27  21

18

26  22

25  23

16  24  31